# EUROPEAN PATENT SPECIFICATION

(11) **EP 1 475 165 B1**
(45) Date of publication and mention of the grant of the patent: **24.12.2008**
(21) Application number: 04010252.7
(22) Date of filing: 30.04.2004
(51) Int. Cl.: B21B 31/07

(54) **Triple bearing arrangement for cantilevered roll shafts**
Dreifach-Lagerung für fliegend gelagerte Walzenwellen
Palier triple des abres d'un laminoir en porte-à-faux

(30) Priority: 08.05.2003 US 468807 P; 21.04.2004 US 828945
(43) Date of publication of application: 10.11.2004
(73) Proprietor: MORGAN CONSTRUCTION COMPANY, Worcester Massachusetts 01605 (US)
(72) Inventor: Titus, David G., West Boylston Massachusetts 01583 (US)
(74) Representative: Specht, Peter

(56) References cited:
- EP-A- 0 824 045
- DE-A1- 3 509 613
- US-A- 3 491 571
- PATENT ABSTRACTS OF JAPAN vol. 012, no. 311 (M-734), 24 August 1988 (1988-08-24) -& JP 63 084707 A (KOBE STEEL LTD), 15 April 1988 (1988-04-15)

## Description

### 1. Field of the Invention

The invention relates to a rolling mill roll stand according to the preamble of claim 1. The invention relates generally to rolling mills for rolling long products, e.g., rods, bars and the like, and is concerned in particular with an improvement to the so-called "cantilevered" roll stands, where the work rolls are mounted on the distal ends of support shafts.

### 2. Description of the Prior Art

Cantilevered work rolls are conventionally mounted on the distal ends of parallel support shafts. The shafts are journalled for rotation in axially spaced work and drive side bearings contained in eccentric sleeves, the latter in turn being mounted for rotatable adjustment in a cartridge housing. The roll shafts carry gears arranged to mesh with gears of the mill drive, and by simultaneously rotating the eccentric sleeves in opposite directions, symmetrical adjustments are imparted to the work rolls with respect to the mill pass line.

A more detailed description of this conventional arrangement can be had by reference to U.S. Patent No. Re 28,107.

With the advent of smaller diameter work rolls, roll shaft diameters are also of necessity decreased, resulting in shaft lengths being excessively long in comparison to their diameters. Although the conventional two bearing arrangement can satisfy strength requirements reasonable well, the same is not true for stiffness, and shaft deflection becomes a problem.

One attempt at solving this problem is disclosed in U.S. Patent No. 6,561,003 (Grimmel). Here, pressure sleeves are employed between the conventional work and drive side bearings. The pressure sleeves are hydrostatically loaded and controlled remotely to preload the shafts and thereby counteract their tendency to deflect under load. In addition to being unduly complex and expensive, this arrangement suffers from a lack of rigidity in that the roll shafts are merely contained by the pressure sleeves, with the latter lacking critical radial support from the surrounding cartridge housing.

A rolling mill roll in accordance with the preamble of claim 1 is known from JP-A-63084707.

DE 3509613 A discloses a bearing for a rotatable shaft comprising main bearings and further bearings which are located in an axial distance to the main bearings and which are eccentrically displaced or displaceable in a radial direction in relation to the main bearings.

### SUMMARY OF THE INVENTION

The invention provides a rolling mill roll stand comprising: parallel roll shafts rotatably supported by axially spaced first and second bearings; parallel eccentric sleeves containing said bearings, said eccentric sleeves being rotatably supported in a housing, said roll shafts having cantilevered ends that project externally from one side said housing and that are adapted to carry work rolls; and third bearings contained by said eccentric sleeves, said third bearings being arranged to rotatably support said roll shafts at intermediate locations between and spaced axially from both said first and second bearings, said eccentric sleeves being journalled for rotation within and being radially supported by said housing at said intermediate locations.

Preferably, said third bearings are oil film bearings. According to another embodiment, said roll shafts have second cantilevered ends projecting externally from the opposite side of said housing, said second cantilevered ends being adapted to support drive gears.

Preferably, said third bearings are oil lubricated sleeve bearings having self modulating stiffnesses that increase in direct proportion to the eccentricity of the shaft journal surfaces within said bearings.

In accordance with the present invention, additional shaft rigidity is supplied by providing third bearings between the conventional work and drive side bearings. The third bearings are of the "oil film" type, in which the shafts are journalled for rotation on films of oil maintained hydronamically at the bearing load zones. The oil film bearings have self modulating stiffnesses that increase in direct proportion to bearing eccentricity, without the need for separately controlled hydrostatic introduction of pressurized oil. In addition, the third bearings are radially supported by both the eccentric sleeves and the cartridge housing, thus providing increased rigidity as compared to known prior art arrangements.

These and other features and advantages of the present invention will now be described in greater detail with reference to the accompanying drawings, wherein:

### BRIEF DESCRIPTION OF THE DRAWINGS

Figure 1 is a longitudinal sectional view taken through a cantilevered roll stand embodying the concept of the present invention;
Figure 2 is a cross sectional view taken along line 2-2 of Figure 1; and
Figure 3 is an enlarged view of a portion of Figure 2; and
Figure 4 is a graph depicting how the stiffness of the third oil film bearings increases in direct proportion to bearing eccentricity.

### DETAILED DESCRIPTION OF PREFERRED EMBODIMENT

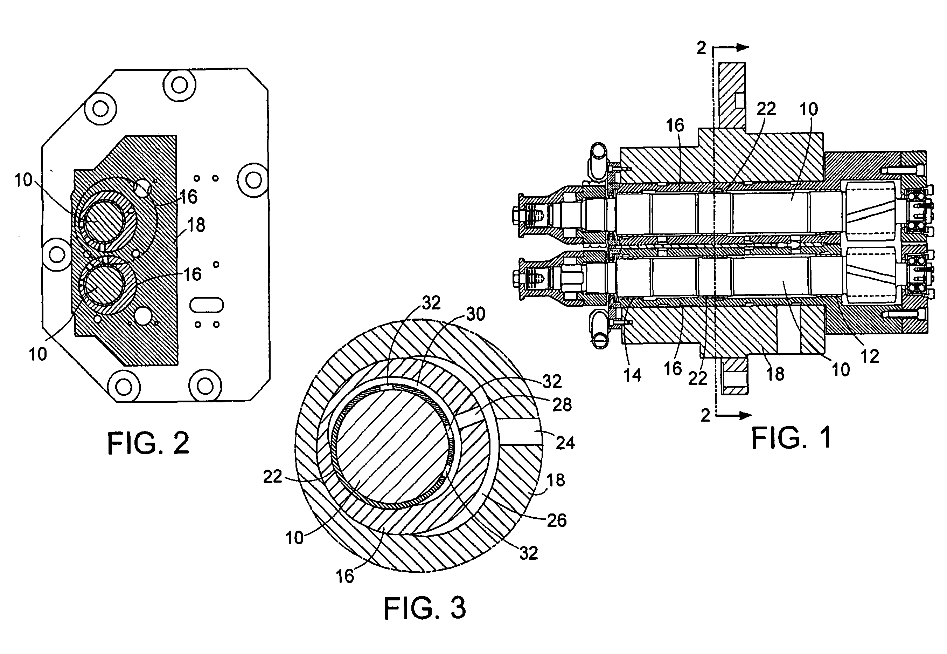

Referring initially to Figures 1 and 2, roll shafts 10 are rotatably supported by drive and work side sleeve bearings 12, 14 contained in eccentric sleeves 16. The eccentric sleeves are journalled for rotation and rotatably adjustable within a cartridge housing 18. The cantilevered outboard ends 10a of the roll shafts are configured to support work rolls (not shown), and the cantilevered inboard ends carry gears 20 configured and arranged to mesh with drive gears (not shown) of the mill drive.

The midsections of the roll shafts are journalled for rotation in third bearings 22 contained within midsections of the eccentric sleeves 16, with the midsections of the eccentric sleeves being tightly contained within and thus robustly backed by the cartridge housing. The bearings 22 are of the sleeve-type, lubricated by oil, with shaft rotation creating a hydrodynamic film of oil at the load zones of the bearings.

More particularly, and as can best be seen in Figure 3, the cartridge housing 18 is provided with an inlet passageway 24 communicating with an arcuate groove 26 in the bore containing the eccentric sleeve 16. A radial passageway 28 leads from the groove 26 to a second arcuate of groove 30 in the bore of the eccentric sleeve. The sleeve bearing 22 has radial passageways 32 communicating with the groove 30.

During operation of the roll stand, oil is supplied via passageway 24, groove 26, passageway 28, groove 30 and passageways 32 to the operating clearance between the journal surface of shaft 10 and the interior bearing surface of sleeve 22. The oil is hydrodynamically formed into a wedge-shaped film at the loaded zone of the bearing.

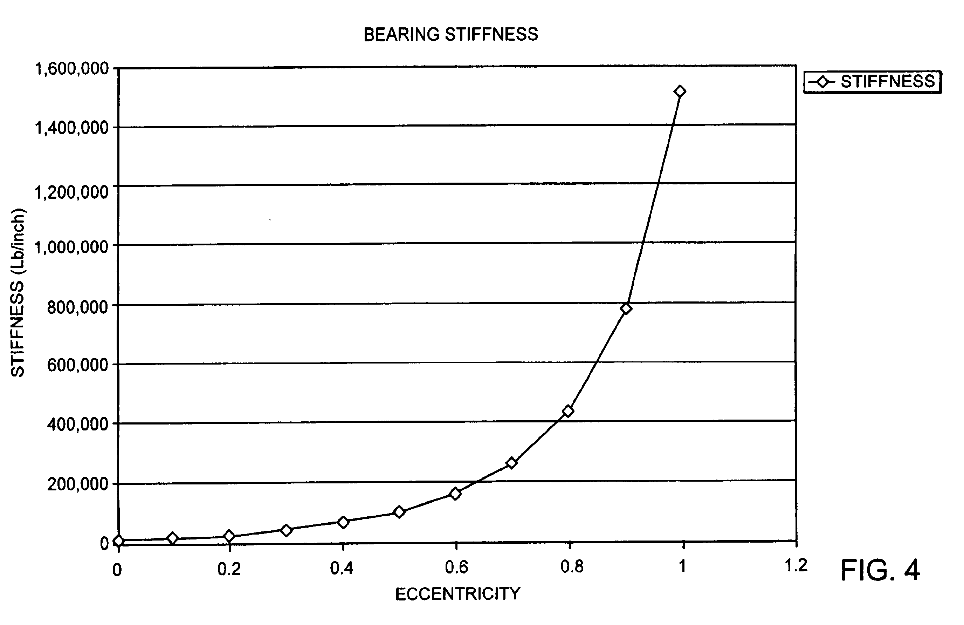

As the roll shafts undergo loading due to separating forces being exerted on the cantilevered work rolls, shaft deflection will be resisted by the bearings 22. As the roll shafts tend to deflect under loads, Figure 4 illustrates how the stiffness of the bearings 22 increases hydrodynamically in response to increased eccentricity of the shaft journal surfaces within the bearings. The increase in bearing stiffness is self modulating, requiring no separate application of pressurized oil and no remote control.

The eccentric sleeves 16 are of a robust design, with mid sections that extend continuously between the drive and work side bearings. This, in combination with the backing of the eccentric sleeve midsections by the cartridge housing and the self modulating counter forces being developed by the bearings 22, all contribute to significantly increase the overall stiffness of the roll package.

## Claims

1. A rolling mill roll stand comprising:
a. parallel roll shafts (10) rotatably supported by axially spaced first and second bearings (12, 14);
b. parallel eccentric sleeves (16) containing said bearings, said eccentric sleeves being rotatably supported in a housing (18), said roll shafts (10) having cantilevered ends (10a) that project externally from one side said housing and that are adapted to carry work rolls; and
c. third bearings (22) contained by said eccentric sleeves, said third bearings being arranged to rotatably support said roll shafts at intermediate locations between and spaced axially from both said first and second bearings,
**characterized by**
d. said eccentric sleeves (16) being journalled for rotation within and being radially supported by said housing (18) at said intermediate locations

2. The roll stand of claim 1 wherein said third bearings (22) are oil film bearings.

3. The roll stand of claim 1 wherein said roll shafts (10) have second cantilevered ends (10a) projecting externally from the opposite side of said housing (18), said second cantilevered ends (10a) being adapted to support drive gears.

4. The roll stand of claim 1 wherein said third bearings (22) are oil lubricated sleeve bearings having self modulating stiffnesses that increase in direct proportion to the eccentricity of the shaft journal surfaces within said bearings.

## Patentansprüche

1. Walzgerüst für ein Walzwerk, umfassend:
a. parallele Walzenwellen (10), die durch axial beabstandete erste und zweite Lager (12, 14) drehbar gelagert sind;
b. parallele exzentrische Buchsen (16), die die Lager einschließen, wobei die exzentrischen Buchsen in einem Gehäuse (18) drehbar gelagert sind, wobei die Walzenwellen (10) fliegend gelagerte Enden (10a) aufweisen, die sich von einer Seite des Gehäuses nach außen erstrecken und die geeignet sind, Arbeitswalzen zu tragen; und
c. dritte Lager (22), die durch die exzentrischen Buchsen eingeschlossen werden, wobei die dritten Lager so angeordnet sind, dass sie die Walzenwellen an Zwischenpositionen zwischen und axial beabstandet von den ersten und zweiten Lagern drehbar halten,
**dadurch gekennzeichnet, dass**
d. die exzentrischen Buchsen (16) an den Zwischenpositionen für eine Drehbewegung in dem Gehäuse (18) gelagert sind und von diesem radial gehalten werden.

2. Walzgerüst nach Anspruch 1, wobei die dritten Lager (22) Ölfilmlager sind.

3. Walzgerüst nach Anspruch 1, wobei die Walzenwellen (10) zweite fliegend gelagerte Enden (10a) aufweisen, die von der gegenüberliegenden Seite des Gehäuses (18) nach außen vorragen, wobei die zweiten fliegend gelagerten Enden (10a) geeignet sind, Antriebszahnräder zu halten.

4. Walzgerüst nach Anspruch 1, wobei die dritten Lager (22) ölgeschmierte Gleitlager sind, die selbstmodulierende Steifigkeiten aufweisen, die direkt proportional zur Exzentrizität der Achszapfenoberflächen in den Lagern steigen.

## Revendications

1. Cage de laminage comprenant :
a. des arbres à rouleaux parallèles (10) supportés de façon rotative par des premier et deuxième paliers espacés de façon axiale (12, 14) ;
b. des manchons excentriques parallèles (16) contenant lesdits paliers, lesdits manchons excentriques étant supportés de façon rotative dans un logement (18), lesdits arbres à rouleaux (10) possédant des extrémités en porte-à-faux (10a) qui font saillie extérieurement à partir d'un côté dudit logement et qui sont adaptées pour supporter des rouleaux d'usinage ; et
c. des troisièmes paliers (22) contenus par lesdits manchons excentriques, lesdits troisièmes paliers étant agencés pour supporter lesdits arbres à rouleaux de façon rotative dans des emplacements intermédiaires entre lesdits, et espacés de façon axiale desdits, premier et deuxième paliers,
**caractérisé par**
d. lesdits manchons excentriques (16) étant en portée pour tourner à l'intérieur dudit, et étant supportés de façon radiale par ledit, logement (18) dans lesdits emplacements intermédiaires.

2. Cage de laminage selon la revendication 1, dans laquelle lesdits troisièmes paliers (22) sont des paliers à film d'huile.

3. Cage de laminage selon la revendication 1, dans laquelle lesdits arbres à rouleaux (10) possèdent des secondes extrémités en porte-à-faux (10a) faisant saillie extérieurement à partir du côté opposé dudit logement (10), lesdites secondes extrémités en porte-à-faux (10a) étant adaptées pour supporter des roues d'entraînement.

4. Cage de laminage selon la revendication 1, dans laquelle lesdits troisièmes paliers (22) sont des paliers à douille lubrifiés à l'huile possédant des raideurs à modulation automatique qui augmentent en proportion directe à l'excentricité des surfaces de portée d'arbre à l'intérieur desdits paliers.
